# EUROPEAN PATENT APPLICATION

(11) **EP 3 950 340 A1**
(43) Date of publication of application: **09.02.2022**
(21) Application number: 20779805.9
(22) Date of filing: 13.02.2020
(51) Int. Cl.: B32B 27/20, B44C 1/17, D06P 5/26

(54) **TRANSFER PAPER AND TRANSFER PRINTING METHOD**

(30) Priority: 26.03.2019 JP 2019058089; 13.12.2019 JP 2019225616
(71) Applicant: Mitsubishi Paper Mills Limited, Tokyo 130-0026 (JP)
(72) Inventor: NAKANO Akira, Tokyo 130-0026 (JP)
(74) Representative: Beckmann, Claus
(86) International application number: PCT/JP2020/005439
(87) International publication number: WO 2020/195284

(57) **Abstract**

The problem of this invention is to provide a transfer paper with good close contact to fiber materials and good color density of patterns formed on the fiber materials, good peeling, and no significant difference in texture between patterned and non-patterned areas of the fiber materials.

The present invention provides a transfer paper having a base material with one or more non-aqueous resin laminate layer(s) on one side of a base paper, and one or more coating layer(s) on the laminate layer(s) of the base material, wherein
an outermost coating layer, which is positioned outermost in the coating layer(s) with respect to the base material, contains a white pigment and a binder,
the white pigment contains at least an amorphous silica, and
the binder contains at least five types consisting of a water-soluble polyester resin, a carboxylic acid-modified polyvinyl alcohol resin, an acrylic resin, a hydroxypropyl starch and an alginate.

## Description

### TECHNICAL FIELD

The present invention relates to a transfer paper used for transferring a pattern in a transfer textile printing method that forms a pattern on a fiber material, and to a transfer textile printing method using the same. In particular, it relates to a transfer paper and a transfer textile printing method that are suitable when the fiber material is cotton.

### BACKGROUND ART

In textile printing paper where the expression of fine textile printing patterns, excellent uniformity of dyeability, and flexible fiber texture can be obtained with good reproducibility, known is a textile printing paper that is used for a transfer textile printing method, in which a pattern is printed on a textile printing paper with ink containing a dye to obtain a printed textile printing paper, the dye is transferred by heating and pressurizing with the printed textile printing paper and a fiber material or leather material in close contact, and the fiber material or leather material in a state attached to the printed textile printing paper is subjected to a fixation treatment. That textile printing paper has an ink receptive and adhesive layer, in which the ratio of a natural glue agent to a water-soluble synthetic binder is in the range of 5% to 0% in terms of solid content, and a hydrophilic mixture containing various auxiliaries is applied, sprayed, or dipped into a base paper, and then dried so that these components are absorbed in or laminated on the paper (see, for example, Patent Document 1).

### PRIOR ART DOCUMENTS

### Patent Documents

Patent Document 1: Japanese Patent Application Kokai Publication No. 2016-102283 (unexamined, published Japanese patent application)

### SUMMARY OF THE INVENTION

### Problems to be Solved by the Invention

In transfer textile printing methods, a printed transfer paper and a fiber material are in close contact with each other, and dye received by the printed transfer paper is transferred to the fiber material. In the textile printing industry using the transfer textile printing methods, the following items are required in terms of work efficiency and quality of the pattern formed on the fiber material.
(1) Printed transfer paper has good close contact to the fiber material.
(2) Color density of the pattern formed on the fiber material is good.
(3) Printed transfer paper is peeled off well from the fiber material after the dye is transferred.
(4) There is no significant difference in texture between the area of the fiber material on which the pattern is formed and the area of the fiber material on which the pattern is not formed.

If it is not good for (1), the work efficiency of transfer printing will decrease, or the formed pattern will be distorted or out of focus, which may cause practical problems. If it is not good for (2), the product is not viable. If it is not good for (3), the work efficiency of transfer printing will be decreased or the pattern formed on the fiber material will be missing. With respect to (4), if there is a large difference in texture, the product value will decrease. This is especially undesirable when the fiber material is cotton, because the soft touch characteristic of cotton is lost in the area where the pattern is formed.

In the transfer textile printing method as described in Patent Document 1, while the transfer paper is in close contact with the fiber material, a dye fixing treatment such as steaming treatment is performed. The reason for this is that the steaming treatment softens water-soluble synthetic binders and natural glue agents, making it easier for the printed transfer paper to peel off from the fiber material. However, in the dye fixing treatment with the printed transfer paper in close contact with the fiber material, the contacted material between the printed transfer paper and the fiber material is thick, which makes it difficult to transport and handle in the fixing treatment equipment. In the dye fixing treatment with the printed transfer paper in close contact with the fiber material, the dye remaining in the printed transfer paper may cause fogging during the dye fixing treatment. The "fogging" is a phenomenon in which the dye is transferred to an area where the pattern does not originally exist. Typical fogging is speckled fogging, in which dye transfer occurs in the form of spots in areas where no pattern exists. On the other hand, it is difficult to peel off the printed transfer paper from the fiber material after heating and pressurizing with the printed transfer paper and the fiber material in close contact, and before performing dye fixing treatment such as steaming treatment. Even if the printed transfer paper can be peeled off, the pattern formed on the fiber material may be missing or otherwise defective.

In view of the above, it is an object of the present invention to provide a transfer paper that can be peeled off from the fiber material after heating and pressurizing with the printed transfer paper and the fiber material in close contact and before performing a dye fixing treatment, i.e., such a transfer paper that satisfies (3) above, and that satisfies (1), (2) and (4) above.

### Means for Solving the Problems

As a result of extensive studies to solve the above problems, the present inventors have accomplished the object of the present invention by the following.
[1] A transfer paper before printing a pattern for use in a transfer textile printing method which comprises the following steps: printing a pattern on the transfer paper with an ink containing a dye to obtain a printed transfer paper; transferring the dye from the printed transfer paper to a fiber material by heating and pressurizing with the printed transfer paper and the fiber material in close contact; peeling off the printed transfer paper from the fiber material after the transferring step; and subjecting the fiber material after the peeling step to a dye fixing treatment,
   comprising a base material with one or more non-aqueous resin laminate layer(s) on one side of a base paper, and one or more coating layer(s) on the laminate layer(s) of the base material,
      wherein
   an outermost coating layer, which is positioned outermost in the coating layer(s) with respect to the base material, contains a white pigment and a binder,
   the white pigment contains at least an amorphous silica, and
   the binder contains at least five types consisting of a water-soluble polyester resin, a carboxylic acid-modified polyvinyl alcohol resin, an acrylic resin, a hydroxypropyl starch and an alginate.
[2] In at least one embodiment, the transfer paper according to [1] above, wherein contents of the water-soluble polyester resin, the carboxylic acid-modified polyvinyl alcohol resin, the acrylic resin, the hydroxypropyl starch, and the alginate in the outermost coating layer are 5 parts by mass or more and 30 parts by mass or less of the water-soluble polyester resin, 10 parts by mass or more and 35 parts by mass or less of the carboxylic acid-modified polyvinyl alcohol resin, 5 parts by mass or more and 25 parts by mass or less of the acrylic resin, 10 parts by mass or more and 35 parts by mass or less of the hydroxypropyl starch, and 3 parts by mass or more and 15 parts by mass or less of the alginate, respectively, based on 20 parts by mass of the white pigment in the outermost coating layer.
   By satisfying the respective ranges of contents, the transfer paper improves the close contact between the fiber material and the printed transfer paper, the peeling of the printed transfer paper from the fiber material, the color density of the pattern formed on the fiber material, and/or the no significant difference in texture between the patterned and non-patterned areas of the fiber material.
[3] In at least one embodiment, the transfer paper according to [1] or [2] above, wherein the outermost coating layer contains a fatty acid ester.
   By the outermost coating layer containing the fatty acid ester, the transfer paper improves the color density of the pattern formed on the fiber material and the peeling of the printed transfer paper from the fiber material.
[4] A transfer textile printing method comprising the following steps:
   obtaining a transfer paper having a base material with one or more non-aqueous resin laminate layer(s) on one side of a base paper, and one or more coating layer(s) on the laminate layer(s) of the base material, wherein an outermost coating layer, which is positioned outermost in the coating layer(s) with respect to the base material, contains a white pigment and a binder, the white pigment contains at least an amorphous silica, and the binder contains at least five types consisting of a water-soluble polyester resin, a carboxylic acid-modified polyvinyl alcohol resin, an acrylic resin, a hydroxypropyl starch and an alginate;
   printing a pattern on the transfer paper with an ink containing a dye to obtain a printed transfer paper;
   transferring the dye from the printed transfer paper to a fiber material by heating and pressurizing with the printed transfer paper and the fiber material in close contact;
   peeling off the printed transfer paper from the fiber material after the transferring step; and
   subjecting the fiber material after the peeling step to a dye fixing treatment.

### Effect of the invention

The present invention can provide a transfer paper and a transfer textile printing method that satisfy the following requirements: (1) the printed transfer paper has good close contact to the fiber material; (2) the color density of the pattern formed on the fiber material is good; (3) the printed transfer paper peels off well from the fiber material after transferring the dye; and (4) there is no significant difference in texture between the area of the fiber material on which the pattern is formed and the area of the fiber material on which the pattern is not formed.

### MODE FOR CARRYING OUT THE INVENTION

The present invention will be described below in detail.

In the present invention, the term "transfer paper" means a paper in a blank state before a pattern to be transferred is printed. The term "printed transfer paper" means a paper on which a pattern to be transferred has been printed with respect to the transfer paper.

In the present invention, "having a coating layer" means a paper having a distinct layer distinguishable from a base paper or a base material when observing a cross section of a transfer paper with an electron microscope. For example, when a resin component or a polymer component has been applied and the said applied component has been absorbed by a base paper or a base material, and then the cross section of the transfer paper is observed with an electron microscope to have confirmed that it does not have a distinct clear coating layer distinguishable from the base paper or the base material, such a paper does not fall under "having a coating layer".

### [Transfer paper]

The first embodiment of the present invention is a transfer paper. The transfer paper has a base material having one or more non-aqueous resin laminate layer(s) on one side of a base paper, and one or more coating layer(s) on the laminate layer(s) of the base material. In the coating layer(s), a coating layer positioned on the outermost side with respect to the base material is referred to as an outermost coating layer. When the coating layer is one layer, the coating layer corresponds to the outermost coating layer. The outermost coating layer contains a white pigment and a binder. The white pigment contains at least an amorphous silica. The binder contains at least five types consisting of a water-soluble polyester resin, a carboxylic acid-modified polyvinyl alcohol resin, an acrylic resin, a hydroxypropyl starch and an alginate. In the case of two or more coating layers, a coating layer that exists between the base material and the outermost coating layer is a coating layer known in the field of coated paper, and is not particularly limited in terms of the presence or absence and type of white pigments and the presence or absence and type of binders. The coating layer that exists between the base material and the outermost coating layer can contain various additives conventionally known in the field of coated paper.

From the viewpoint of production cost, the coating layer(s) is preferably one layer. The coating layer(s) may be provided on one side or both sides of the base material. The coating layer(s) shall be provided at least on the side with the laminate layer(s) of the base material. When the outermost coating layer according to the present invention is provided on one side of the base material, the transfer paper may have a conventionally known back coat layer on the back side of the base material.

The coating amount of the coating layer is not particularly limited. From the viewpoint of the production cost of a transfer paper and ease of handling, the coating amount is preferably 5 g/m² or more and 70 g/m² or less in terms of dry solid content per one side. The upper limit of the coating amount is more preferably 30 g/m² or less. Furthermore, the coating amount is most preferably 10 g/m² or more and 30 g/m² or less per side from the perspective of reducing manufacturing costs and preventing the coating layer(s) from missing when the printed transfer paper is in close contact with the fiber material. When there are a plurality of coating layers per one side, the coating amount is the total value thereof.

The base material is laminated paper with one or more non-aqueous resin laminate layer(s) on the side of the base paper where at least the outermost coating layer is to be provided.

In the present invention, when an outermost coating layer of printed transfer paper is difficult to peel off from a fiber material, by the transfer paper having a non-aqueous resin laminate layer(s) and an outermost coating layer, the fiber material can be successfully peeled off from the printed transfer paper by peeling between the base material and the coating layer(s) including the outermost coating layer. After peeling, all or part of the coating layer(s) can be included adhered to the fiber material, but the coating layer(s) can then be removed by washing with water. By using the transfer paper according to the present invention in transfer textile printing methods, in which fiber materials are subject to a dye fixing treatment after printed transfer paper is peeled off from the fiber materials, the problem of transportation and handling in a fixing treatment equipment are improved. Furthermore, in the case where the base material is a laminated paper, when printing patterns on the transfer paper with inks containing dyes, the non-aqueous resin laminate layer(s) prevents the dyes from reaching the base paper, thereby reducing the occurrence of defects and the reduction of color density in the patterns formed on the fiber material.

The base paper is a papermaking paper obtained by making a paper stock containing at least one pulp selected from chemical pulp such as LBKP (Leaf Bleached Kraft Pulp) and NBKP (Needle Bleached Kraft Pulp), mechanical pulp such as GP (Groundwood Pulp), PGW (Pressure Ground Wood pulp), RMP (Refiner Mechanical Pulp), TMP (Thermo Mechanical Pulp), CTMP (ChemiThermoMechanical Pulp ), CMP (Chemi Mechanical Pulp) and CGP (Chemi Groundwood Pulp), and waste paper pulp such as DIP (Delnked Pulp), various fillers such as ground calcium carbonate, precipitated calcium carbonate, talc, clay, kaolin and calcined kaolin, and various additives such as a sizing agent, a fixing agent, a retention aid, a cationizing agent and a paper strengthening agent as required into a paper. Further, the base paper includes woodfree paper which is subjected to calendering processing, surface sizing with starch, polyvinyl alcohol or the like, or surface treatment or the like on a papermaking paper. Further, the base paper includes woodfree paper which has been subjected to calendering processing after subjected to surface sizing or surface treatment.

Paper making is carried out by adjusting a paper stock to acidic, neutral or alkaline and using a conventionally known papermaking machine. Examples of a papermaking machine may include a fourdrinier papermaking machine, a twin wire papermaking machine, a combination papermaking machine, a cylindrical papermaking machine, a yankee papermaking machine and the like.

The basis weight of the base paper is not particularly limited. From the viewpoint of ease of handling of paper, the basis weight of the base paper is preferably 10 g/m² or more and 100 g/m² or less, more preferably 30 g/m² or more and 100 g/m² or less.

In the paper stock, one or two or more of other additives selected from a binder, a pigment dispersant, a thickener, a fluidity improving agent, a defoamer, an antifoamer, a releasing agent, a foaming agent, a penetrating agent, a colored dye, a colored pigment, an optical brightener, an ultraviolet light absorber, an antioxidant, a preservative, a fungicide, an insolubilizer, an wet paper strengthening agent, a dry paper strengthening agent and the like can be blended appropriately as long as the desired effect of the present invention is not impaired.

A base material having a non-aqueous resin laminate layer(s) on at least the side of the base paper on which the outermost coating layer is to be provided can be obtained by providing the non-aqueous resin laminate layer(s) on one side of the base paper described above. The non-aqueous resin laminate layer(s) has the functions of supporting the separation of the printed transfer paper from the fiber material and preventing the penetration of dyes into the base paper.

The non-aqueous resin laminate layer(s) is mainly formed from a non-aqueous resin. The non-aqueous resin that forms the non-aqueous resin laminate layer(s) is a polyolefin resin, vinyl resin, resin that cures with an electron beam, or the like which forms a layer that is insoluble in water on the base paper. Examples of the non-aqueous resin may include polyethylene such as high-density polyethylene, low-density polyethylene, medium-density polyethylene, and linear low-density polyethylene; polypropylene such as isotactic, syndiotactic, atactic, mixtures thereof, random copolymers and block copolymers with ethylene; and others, such as polymethylpentene, polyethylene glycol terephthalate, polyvinyl chloride, polyvinylidene chloride, ethylene vinyl alcohol copolymers, ethylene vinyl acetate copolymers, and the like. For non-aqueous resins, one or more types selected from the group consisting of these can be used.

The method of applying a non-aqueous resin laminate layer(s) to the base paper is not particularly limited. For example, a method using a conventionally known laminator equipment such as a general melt extrusion die, T-die, or multilayer simultaneous extrusion die can be mentioned. On one side of the base paper, there is one or more non-aqueous resin laminate layer(s). From the viewpoint of manufacturing cost, one non-aqueous resin laminate layer is preferred. The thickness of the non-aqueous resin laminate layer(s) is preferably 10 µm or more, and more preferably 15 µm or more. This is because it provides sufficient coverage of the base paper and the above functions of the non-aqueous resin laminate layer(s). The thickness of the non-aqueous resin laminate layer(s) is preferably 30 µm or less. The reason for this is that the above functions are saturated at 30 µm, and material costs are high when the thickness exceeds 30 µm.

The thickness of the non-aqueous resin laminate layer(s) refers to the thickness of that layer when there is one non-aqueous resin laminate layer, and the total thickness of these layers when there are two or more non-aqueous resin laminate layers.

The coating layer(s) can be provided on the base material or the lower coating layer by applying and drying each coating layer-coating composition on the base material or the lower coating layer.

The method of providing a coating layer is not particularly limited. For example, an applying method and a drying method using a coating apparatus and a drying apparatus conventionally known in the field of papermaking can be mentioned. Examples of the coating apparatus may include a size press, a gate roll coater, a film transfer coater, a blade coater, a rod coater, an air knife coater, a comma coater^{®}, a gravure coater, a bar coater, an E bar coater, a curtain coater, and the like. Examples of the drying apparatus may include a hot air dryer such as a straight tunnel dryer, an arch dryer, an air loop dryer and a sine curve air float dryer, an infrared heating dryer, a dryer using microwave, and the like.

In addition, the coating layer can be subjected to calendering processing after applying and drying.

The outermost coating layer contains at least five binders consisting of an water-soluble polyester resin, a carboxylic acid-modified polyvinyl alcohol resin, an acrylic resin, a hydroxypropyl starch and an alginate. By blending these five binders into the coating layer-coating composition of the outermost coating layer, the outermost coating layer can contain the water-soluble polyester resin, carboxylic acid-modified polyvinyl alcohol resin, acrylic resin, hydroxypropyl starch and alginate.

Water-soluble polyester resins are resins obtained by polycondensation reaction from polyvalent carboxylic acid and polyol, in which polyvalent carboxylic acid and polyol as constituent components account for 60% by mass or more of the resin. Examples of polyvalent carboxylic acids may include terephthalic acid, isophthalic acid, phthalic acid, naphthalene dicarboxylic acid, adipic acid, succinic acid, sebacic acid, dodecanedioic acid, and the like, and it is preferable to select one or more from the group consisting of these. Examples of polyols may include ethylene glycol, propylene glycol, 1,4-butanediol, 1,6-hexanediol, neopentyl glycol, diethylene glycol, dipropylene glycol, cyclohexanedimethanol, bisphenol, and the like, and it is preferable to select one or more from the group consisting of these. Water-soluble polyester resins can also be copolymerized with components having hydrophilic groups such as carboxyl groups or sulfonic acid groups to increase water solubility.

Water-soluble polyester resins are commercially available from companies such as GOO Chemical Co., Ltd., Takamatsu Oil & Fat Co., Ltd., and Unitika Ltd., and these commercial products can be used in the present invention. The term "water-soluble" refers to the ability to dissolve more than 1% by mass in water at 20°C in the end.

Carboxylic acid-modified polyvinyl alcohol resins have carboxylic acid-modified polyvinyl alcohol moieties by the introduction of carboxyl groups.

Carboxylic acid-modified polyvinyl alcohol resins may include those obtained by graft polymerization or block polymerization of polyvinyl alcohol and vinyl carboxylic acid compounds, those obtained by copolymerization of vinyl ester compounds and vinyl carboxylic acid compounds followed by saponification, and those obtained by reacting polyvinyl alcohol with a carboxylating agent. Examples of the vinyl carboxylic acid compounds may include compounds containing carboxyl groups or their anhydrides, such as acrylic acid, methacrylic acid, maleic acid (maleic anhydride), phthalic acid (phthalic anhydride), itaconic acid (itaconic anhydride), and trimellitic acid (trimellitic anhydride). Examples of the vinyl ester compounds may include vinyl acetate, vinyl formate, vinyl propionate, vinyl ester of versatic acid, vinyl vivalate, and the like. Examples of the carboxylating agents may include succinic anhydride, maleic anhydride, acetic anhydride, trimellitic anhydride, phthalic anhydride, pyromellitic anhydride, glutaric anhydride, hydrogenated phthalic anhydride, naphthalene dicarboxylic anhydride, and the like.

Carboxylic acid-modified polyvinyl alcohol resins are commercially available from companies such as The Nippon Synthetic Chemical Industry Co., Ltd., Japan Vam & Poval Co., Ltd., and Kuraray Co., Ltd., and these commercial products can be used in the present invention.

The carboxylic acid-modified polyvinyl alcohol resin preferably has a number average degree of polymerization of 1000 or more and 3000 or less. The carboxylic acid-modified polyvinyl alcohol resin preferably has a degree of saponification of 85 mol% or more and 90 mol% or less. The reason for these is that it has excellent compatibility with other resins.

Acrylic resin is a general term for polymers or copolymers consisting mainly of acrylic acid and its esters and other derivatives, and methacrylic acid and its esters and other derivatives. Examples of acrylic acid esters may include methyl acrylate, ethyl acrylate, butyl acrylate, 2-ethylhexyl acrylate, 2-dimethylaminoethyl acrylate, 2-hydroxyethyl acrylate, and the like. Examples of the methacrylic acid esters may include methyl methacrylate, ethyl methacrylate, butyl methacrylate, 2-ethylhexyl methacrylate, 2-dimethylaminoethyl methacrylate, 2-hydroxyethyl methacrylate, and the like. In the present invention, copolymers such as acrylonitrile, acrylamide, and N-methylol acrylamide are also included in acrylic resins.

Acrylic resins are commercially available from companies such as Toagosei Co., Ltd., Nippon Shokubai Co., Ltd., Shin-Nakamura Chemical Co., Ltd., Idemitsu Kosan Co., Ltd., and Mitsubishi Chemical Corporation, and these commercial products can be used in the present invention.

Hydroxypropyl starch is a modified starch in which hydroxypropyl groups are introduced by etherifying some or all of the hydroxyl groups of glucose in polysaccharides in which glucose is polymerized by glycosidic bonds.

Hydroxypropyl starch is commercially available from companies such as Nippon Starch Chemical Co., Ltd., Matsutani Chemical Industry Co., Ltd., and Ingredion Japan K.K., and these commercial products can be used in the present invention.

Alginates are conventionally known and are not limited to any particular type. In terms of the liquid stability of the coating layer-coating composition and the strength of the coating layer, the degree of polymerization of the alginate is preferably in the range of 80 or more and 1100 or less. As the alginate, one or more alginate(s) selected from the group consisting of potassium salts, sodium salts, and ammonium salts are preferred. The reason for this is that they are water soluble. The preferred alginate is sodium alginate, which is a sodium salt. The reason for this is that it is easy to obtain commercially.

Alginates, a typical example of which is sodium alginate, are commercially available from companies such as Furukawa Chemical Industry Co. Ltd., FUJIFILM Wako Pure Chemical Corporation, and KIMICA Corporation, and these commercial products can be used in the present invention. Commercially available alginates are divided into various grades according to the viscosity of a 1 mass% aqueous solution or according to the viscosity of a 10 mass% aqueous solution. They are also classified according to gel strength, degree of purification, etc. In the present invention, the alginate can be of any grade or classification.

In the outermost coating layer per one side of the base material, the content of water-soluble polyester resin is preferably 5 parts by mass or more and 30 parts by mass or less based on 20 parts by mass of white pigment in the outermost coating layer. In the outermost coating layer per one side of the base material, the content of carboxylic acid-modified polyvinyl alcohol resin is preferably 10 parts by mass or more and 35 parts by mass or less based on 20 parts by mass of white pigment in the outermost coating layer. In the outermost coating layer per one side of the base material, the content of acrylic resin is preferably 5 parts by mass or more and 25 parts by mass or less based on 20 parts by mass of white pigment in the outermost coating layer. In the outermost coating layer per one side of the base material, the content of hydroxypropyl starch is preferably 10 parts by mass or more and 35 parts by mass or less based on 20 parts by mass of white pigment in the outermost coating layer. In the outermost coating layer per one side of the base material, the content of alginate is preferably 3 parts by mass or more and 15 parts by mass or less based on 20 parts by mass of white pigment in the outermost coating layer.

In addition, contents of the water-soluble polyester resin, the carboxylic acid-modified polyvinyl alcohol resin, the acrylic resin, the hydroxypropyl starch, and the alginate in the outermost coating layer are 5 parts by mass or more and 30 parts by mass or less of the water-soluble polyester resin, 10 parts by mass or more and 35 parts by mass or less of the carboxylic acid-modified polyvinyl alcohol resin, 5 parts by mass or more and 25 parts by mass or less of the acrylic resin, 10 parts by mass or more and 35 parts by mass or less of the hydroxypropyl starch, and 3 parts by mass or more and 15 parts by mass or less of the alginate, respectively, based on 20 parts by mass of the white pigment in the outermost coating layer. In the outermost coating layer per one side of the base material, the content of the total binder is preferably 50 parts by mass or more and 125 parts by mass or less based on 20 parts by mass of white pigment in the outermost coating layer. When the content of each of water-soluble polyester resin, carboxylic acid-modified polyvinyl alcohol resin, acrylic resin, hydroxypropyl starch, and alginate in the outermost coating layer satisfies the above-mentioned ranges, the close contact between the fiber material and the printed transfer paper, the peeling of the printed transfer paper from the fiber material, the color density of the pattern formed on the fiber material, and/or the no significant difference in texture between the patterned and non-patterned areas of the fiber material are improved.

In addition to water-soluble polyester resin, carboxylic acid-modified polyvinyl alcohol resin, acrylic resin, hydroxypropyl starch, and alginate, the outermost coating layer can contain other binders conventionally known in the field of coated paper. Binders are, for example, water-soluble synthetic resins, water-dispersible synthetic resins, resins derived from natural ingredients, resins obtained by physical or chemical modification of these, and the like. Specific examples of binders may include polyvinyl alcohol resins and their various modified derivatives, except for carboxylic acid-modified polyvinyl alcohol resins, urethane resin, polyamide resin, vinyl acetate resin, styrene butadiene type copolymer resin, styrene acrylic acid type copolymer resin, styrene maleic acid type copolymer resin, styrene acrylic maleic acid type copolymer resin, non-water soluble polyester resin, polyvinyl acetal resin, proteins, casein, gelatin, gums such as etherified tamarind gum, etherified locust bean gum, etherified guar gum and acacia arabic gum, cellulose and modified derivatives of cellulose such as carboxymethyl cellulose and hydroxyethyl cellulose, starch and modified starches other than hydroxypropyl starch, alginate esters, and the like.

In the outermost coating layer, the total amount of water-soluble polyester resin, carboxylic acid-modified polyvinyl alcohol resin, acrylic resin, hydroxypropyl starch and alginate preferably accounts for 85% by mass or more of the binder in the outermost coating layer.

The outermost coating layer contains white pigment. The white pigment is a white pigment conventionally known in the field of coated paper. Examples of white pigments may include inorganic pigments such as ground calcium carbonate, precipitated calcium carbonate, various types of kaolin, clay, talc, calcium sulfate, barium sulfate, titanium dioxide, zinc oxide, zinc sulfide, zinc carbonate, satin white, aluminum silicate, diatomous earth, calcium silicate, magnesium silicate, amorphous silica, colloidal silica, aluminum hydroxide, alumina, alumina hydrate, lithopone, zeolite, magnesium carbonate and magnesium hydroxide, organic pigments such as styrene type plastic pigments, acrylic type plastic pigments, styrene-acrylic type plastic pigments, polyethylene, microcapsules, urea resin and melamine resin, and the like.

The white pigment in the outermost coating layer contains at least amorphous silica.

Amorphous silica can be roughly classified into wet process silica and fumed silica according to a production method. Further, the wet process silica can be classified into precipitated silica and gel process silica according to a production method. Precipitated silica is produced by reacting sodium silicate and sulfuric acid under an alkaline condition, in which silica particles which have grown the particles are aggregated and precipitated, and then through steps of filtration, water washing, drying, pulverization and classification, to produce the precipitated silica. The precipitated silica is commercially available as, for example, Nipsil^{®} from Tosoh Silica Corporation, Finesil^{®} and Tokusil^{®} from Oriental Silicas Corporation, and Mizukasil^{®} from Mizusawa Industrial Chemicals, Ltd.. Gel process silica is produced by reacting sodium silicate and sulfuric acid under an acidic condition. During aging, the microparticles are dissolved and reprecipitated so as to bind the other primary particles to each other, so that clear primary particles disappear and relatively hard agglomerated particles having an internal void structure are formed. Gel process silica is commercially available as, for example, NIPGEL^{®} from Tosoh Silica Corporation, and SYLOID^{®} and SYLOJET^{®} from W. R. Grace & CO. Fumed silica is also called a dry process silica in contrast to a wet process silica, and is generally produced by a flame hydrolysis method. Specifically, it is generally known that silicon tetrachloride is burned together with hydrogen and oxygen to produce it. Instead of silicon tetrachloride, silanes such as methyltrichlorosilane and trichlorosilane can be used alone or in combination with silicon tetrachloride. Fumed silica is commercially available as AEROSIL^{®} from Nippon Aerosil Co., Ltd., and REOLOSIL^{®} from Tokuyama Corporation.

Amorphous silica is more preferably precipitated silica.

The amorphous silica in the outermost coating layer preferably accounts for 85 % by mass or more with respect to the white pigment in the outermost coating layer.

The outermost coating layer may contain various additives conventionally known in the field of coated paper, if necessary, in addition to the white pigment and the binder. Examples of the additives may include a dispersant, a fixing agent, a cationizing agent, a thickener, a fluidity improving agent, a defoamer, a releasing agent, a foaming agent, a penetrating agent, a colored pigment, a colored dye, an optical brightener, an ultraviolet light absorbing agent, an antioxidant, a preservative, fungicide and the like.

Further, the outermost coating layer can contain various auxiliaries conventionally known in a transfer textile printing method. The auxiliaries are added to optimize various physical properties of the outermost coating layer-coating composition or to improve the dyeability of the sublimation textile ink to be transferred. Examples of the auxiliaries may include various surfactants, a humectant, a wetting agent, a pH adjusting agent, an alkaline agent, a color-deepening agent, a deaerator, a reducing inhibitor and the like.

It is preferred that the outermost coating layer contains a fatty acid ester. The reason for this is that it improves the color density of the pattern formed on the fiber material and the peeling of the printed transfer paper from the fiber material.

Fatty acid esters are compounds obtained by the esterification of fatty acids, such as saturated fatty acids, unsaturated fatty acids, higher fatty acids, and lower fatty acids, with alcohols, such as primary alcohols, secondary alcohols, tertiary alcohols, higher alcohols, lower alcohols, monovalent alcohols, and polyhydric alcohols. Examples of the fatty acid esters may include esters of fatty acids with monovalent alcohols, esters of fatty acids with polyhydric alcohols such as esters of fatty acids with ethylene glycol, esters of fatty acids with propylene glycol and esters of fatty acids with glycerin, and polyoxyethylene adducts thereof and other various derivatives. The fatty acid may be an aliphatic fatty acid, an aromatic fatty acid, or a compound having a partially cyclic structure. Alcohols may be aliphatic alcohols, aromatic alcohols, or compounds having a partially cyclic structure. Fatty acid esters are available from companies such as Kao Corporation, Riken Vitamin Co., Ltd., Nicca Chemical Co., Ltd., Chuo Kasei Co., Ltd., and Kawaken Fine Chemicals Co., Ltd., and can be used. The fatty acid esters are preferably esters of fatty acids and polyhydric alcohols.

The content of fatty acid esters in the outermost coating layer is preferably 5 parts by mass or more and 25 parts by mass or less, and more preferably 8 parts by mass or more and 20 parts by mass or less based on 100 parts by mass of binder in the outermost coating layer.

### [Transfer textile printing method]

The transfer paper of the present invention is used in a transfer textile printing method, which includes the steps of: printing a pattern on the transfer paper with ink containing a dye to obtain a printed transfer paper; transferring the dye from the printed transfer paper to a fiber material by heating and pressurizing with the printed transfer paper and the fiber material in close contact; peeling off the printed transfer paper from the fiber material after the transferring step; and subjecting the fiber material after the peeling step to a dye fixing treatment such as steaming.

The second embodiment of this invention is a transfer textile printing method. The transfer textile printing method includes the following steps:
obtaining a transfer paper having a base material with one or more non-aqueous resin laminate layer(s) on one side of a base paper, and one or more coating layer(s) on the laminate layer(s) of the base material, wherein an outermost coating layer, which is positioned outermost in the coating layer(s) with respect to the base material, contains a white pigment and a binder, the white pigment contains at least an amorphous silica, and the binder contains at least five types consisting of a water-soluble polyester resin, a carboxylic acid-modified polyvinyl alcohol resin, an acrylic resin, a hydroxypropyl starch and an alginate;
printing a pattern on the transfer paper with an ink containing a dye to obtain a printed transfer paper;
transferring the dye from the printed transfer paper to a fiber material by heating and pressurizing with the printed transfer paper and the fiber material in close contact;
peeling off the printed transfer paper from the fiber material after the transferring step; and
subjecting the fiber material after the peeling step to a dye fixing treatment.

The transfer paper obtained in the step of obtaining a transfer paper is identical to the transfer paper of the first embodiment of the present invention, so explanation thereof is omitted.

Inks containing dyes include inks containing dyes selected from reactive dyes, acid dyes, metal complex salt type dyes, direct dyes, disperse dyes, sulfide dyes, butt dyes, and cationic dyes. The transfer paper of the present invention is suitable for inks containing reactive dyes.

Inks containing reactive dyes can be prepared by adding reactive dyes, which are colorants, to various solvents such as water and alcohol. The ink can contain various conventionally known auxiliaries such as dispersants, resins, penetrating agents, humectants, thickeners, pH adjusters, antioxidants, and reducing agents as necessary. In addition, inks containing reactive dyes are commercially available and can be obtained.

Printed transfer paper can be obtained by printing a pattern on a transfer paper with ink containing dye. The printing is done on the side with the outermost coating layer of the transfer paper. Printing methods may include gravure printing method, screen printing method, and inkjet printing method, and the like. The inkjet printing method is preferred for printing patterns because of its relatively high image quality and flexibility in the inks used.

The heating and pressurization of the printed transfer paper and the fiber material in close contact is to make the printed surface of the printed transfer paper printed with the pattern and the surface to be printed of the fiber material face each other in close contact, and to heat and pressurize the two in the state of close contact. The conditions for heating and pressurizing with the two in close contact are those conventionally known for transfer textile printing methods. The method of heating and pressurizing with the two in close contact can be, for example, a method of heating and pressurizing with the printed transfer paper in close contact with the fiber material using a press machine, a heating roll, and a heating drum, and the like.

The peeling of the printed transfer paper from the fiber material is performed after the transferring step and before the fixing step. The peeling of the printed transfer paper from the fiber material is to physically peel off the printed transfer paper from the fiber material. The method of peeling is a conventional known method and is not particularly limited. For example, a method of peeling printed transfer paper and fiber material in roll form in which the printed transfer paper and fiber material are attached to each other, by winding each of them individually into a roll, can be mentioned.

In the present invention, when the outermost coating layer of the printed transfer paper is difficult to peel off from the fiber material, by the transfer paper having a non-aqueous resin laminate layer(s) and an outermost coating layer, the fiber material can be successfully peeled off from the printed transfer paper by peeling between the base material and the coating layer(s) including the outermost coating layer. After peeling, all or part of the coating layer(s) can be included adhered to the fiber material, but the coating layer(s) can then be removed by washing with water. By using the transfer paper of the present invention in the transfer textile printing method, in which the fiber material is subject to a dye fixing treatment after the printed transfer paper is peeled off from the fiber material, the problem of transportation and handling in the fixing treatment equipment are improved. Furthermore, if the base material is laminated paper, when printing patterns on the transfer paper with inks containing dyes, the non-aqueous resin laminate layer(s) prevents the dyes from reaching the base paper, thereby further reducing the occurrence of defects and the reduction of color density in the patterns formed on the fiber material.

The transfer textile printing method of the present invention can include a step of washing the fiber material with water after the peeling step and before the fixing step, if necessary.

Dye fixing treatment is a treatment in which the dye transferred from the printed transfer paper to the fiber material is fixed to the fiber material, and is a conventional known treatment method in the field of textile printing. Dye fixing treatment can be, for example, steaming treatment, humidification treatment, dry heat treatment at high temperature, and the like. Steaming treatment is preferred as the dye fixing treatment. Steaming treatment is also called wet-fixing treatment and is a conventionally known treatment. There are three main types of steaming treatments: atmospheric pressure steaming method, HT steaming method, and HP steaming method. In general, the dyes are fixed to the fiber material by wet heat treatment at about 105°C for 10 minutes or more and 15 minutes or less in the atmospheric pressure steaming method, at 150°C or more and 180°C or less for 5 minutes or more and 10 minutes or less in the HT steaming method, and at 120°C or more and 135°C or less for 20 minutes or more and 40 minutes or less in the HP steaming method.

The transfer textile printing method of the present invention can include a step of washing the fiber material with water after the fixing step, if necessary.

The fiber material may be either a natural fiber material or a synthetic fiber material. Examples of the natural fiber material may include cellulosic fiber materials such as cotton, linen, lyocell, rayon and acetate, and protein type fiber materials such as silk, wool and animal hair. Examples of the synthetic fiber material may include polyamide fiber (nylon), vinylon, polyester, polyacrylic and the like. As a configuration of the fiber material, there can be mentioned single, blended, mixed fiber or interwoven fabric such as woven fabric, knitted fabric and nonwoven fabric. Furthermore, these configurations may be combined.

The transfer paper of the present invention is suitable for natural fiber materials, and is especially suitable for cotton.

### EXAMPLES

Hereinafter, the present invention will be described in more detail by examples. It should be noted that the present invention is not limited to these examples. Here, "part by mass" and "% by mass" each represent "parts by mass" and "% by mass" of a dry solid content or a substantial component amount. A coating amount of a coating layer represents a dry solid content.

### <Base paper>

To a pulp slurry consisting of 100 parts by mass of LBKP having a freeness degree of 380 ml csf, 10 parts by mass of calcium carbonate as fillers, 1.2 parts by mass of amphoteric starch, 0.8 part by mass of aluminum sulfate, and 0.1 part by mass of alkyl ketene dimer type sizing agent were added to form a paper stock. Using the paper stock, papermaking paper was made using a fourdrinier papermaking machine, followed by adhering 1.5 g/m² of oxidized starch per side on both sides of the papermaking paper using a size press device and then machine calendaring, to obtain a base paper with a basis weight of 80 g/m².

### <Base material 1>

High density polyethylene was laminated to one side of the above base paper to a thickness of 15 µm using a melt extrusion die to obtain Base material 1 having a non-aqueous resin laminate layer.

### <Base material 2>

The above base paper was used as Base material 2.

### <Coating layer-coating composition >

Water was used as the medium to prepare the coating layer-coating composition using the following formulation. Finally, the concentration of the coating layer-coating composition was set to 15% by mass.

| | |
|---|---|
| Water-soluble polyester resin | Part is listed in Table 1 to Table 5 |
| Polyvinyl alcohols | Type and part are listed in Table 1 to Table 5 |
| Acrylic Resin | Part is listed in Table 1 to Table 5 |
| Starches | Type and part are listed in Table 1 to Table 5 |
| Alginate (sodium alginate) | Part is listed in Table 1 to Table 5 |
| Styrene-butadiene type copolymer | Part is listed in Table 1 to Table 5 |
| White pigment | Type and part are listed in Table 1 to Table 5 |
| Fatty acid esters (glycerin monostearate) | 10 parts by mass / 0 part by mass |
| Humectant (thiourea) | 25 parts by mass |
| Humectant (dicyandiamide) | 25 parts by mass |
| Defoamer | 0.15 part by mass |
| Sodium carbonate | 25 parts by mass |

In Tables 1 through 5, the water-soluble polyester resin used is Plascoat^{®} RZ-142 from GOO Chemical Co., Ltd., the carboxylic acid-modified polyvinyl alcohol resin used is Kuraray Poval^{®} 25-88KL from Kuraray Co., Ltd., the polyvinyl alcohol resin used is Kuraray Poval 22-88 from Kuraray Co., Ltd., the acrylic resin used is NK Binder M-302HN from Shin-Nakamura Chemical Co., Ltd., the hydroxypropyl starch used is Piostarch^{®} H from Nippon Starch Chemical Co.,Ltd., other starches used is Neotac^{®} 40T from Nihon Shokuhin Kako Co., Ltd., the sodium alginate used is FD Algin BL from Furukawa Chemical Industry Co. Ltd., the styrene-butadiene copolymer resin used is JSR 0693 from JSR Corporation, the amorphous silica used is Mizukasil P-603 from Mizusawa Industrial Chemicals, Ltd., and the kaolin used is Ultra White 90 from Engelhard Corporation.

Only in Example 25, the fatty acid ester was set to 0 part by mass.

**[Table 1]**

| | Outermost coating layer | | | Base material | Peeling | Close contact | Color density | Texture |
|---|---|---|---|---|---|---|---|---|
| | Materials | | Part by mass | | | | | |
| Ex. 1 | Water-soluble polyester resin | | 5 | Base material 1 | A | A | A | A |
| | Polyvinyl alcohols | : Carboxylic acid modified polyvinyl alcohol resin | 20 | | | | | |
| | Acrylic resin | | 10 | | | | | |
| | Starches | : Hydroxypropyl starch | 15 | | | | | |
| | Sodium alginate | | 8 | | | | | |
| | Styrene-butadiene type copolymer resin | | 0 | | | | | |
| | White pigment | : Amorphous silica | 20 | | | | | |
| Ex. 2 | Water-soluble polyester resin | | 15 | Base material 1 | A | A | A | A |
| | Polyvinyl alcohols | : Carboxylic acid modified polyvinyl alcohol resin | 20 | | | | | |
| | Acrylic resin | | 10 | | | | | |
| | Starches | : Hydroxypropyl starch | 15 | | | | | |
| | Sodium alginate | | 8 | | | | | |
| | Styrene-butadiene type copolymer resin | | 0 | | | | | |
| | White pigment | : Amorphous silica | 20 | | | | | |
| Ex. 3 | Water-soluble polyester resin | | 30 | Base material 1 | A | A | B | A |
| | Polyvinyl alcohols | : Carboxylic acid modified polyvinyl alcohol resin | 20 | | | | | |
| | Acrylic resin | | 10 | | | | | |
| | Starches | : Hydroxypropyl starch | 15 | | | | | |
| | Sodium alginate | | 8 | | | | | |
| | Styrene-butadiene type copolymer resin | | 0 | | | | | |
| | White pigment | : Amorphous silica | 20 | | | | | |
| Ex. 4 | Water-soluble polyester resin | | 15 | Base material 1 | B | A | A | A |
| | Polyvinyl alcohols | : Carboxylic acid modified polyvinyl alcohol resin | 10 | | | | | |
| | Acrylic resin | | 10 | | | | | |
| | Starches | : Hydroxypropyl starch | 15 | | | | | |
| | Sodium alginate | | 8 | | | | | |
| | Styrene-butadiene type copolymer resin | | 0 | | | | | |
| | White pigment | : Amorphous silica | 20 | | | | | |
| Ex. 5 | Water-soluble polyester resin | | 15 | Base material 1 | A | A | B | A |
| | Polyvinyl alcohols | : Carboxylic acid modified polyvinyl alcohol resin | 35 | | | | | |
| | Acrylic resin | | 10 | | | | | |
| | Starches | : Hydroxypropyl starch | 15 | | | | | |
| | Sodium alginate | | 8 | | | | | |
| | Styrene-butadiene type copolymer resin | | 0 | | | | | |
| | White pigment | : Amorphous silica | 20 | | | | | |
| Ex. 6 | Water-soluble polyester resin | | 15 | Base material 1 | A | A | A | A |
| | Polyvinyl alcohols | : Carboxylic acid modified polyvinyl alcohol resin | 20 | | | | | |
| | Acrylic resin | | 5 | | | | | |
| | Starches | : Hydroxypropyl starch | 15 | | | | | |
| | Sodium alginate | | 8 | | | | | |
| | Styrene-butadiene type copolymer resin | | 0 | | | | | |
| | White pigment | : Amorphous silica | 20 | | | | | |
| Ex. 7 | Water-soluble polyester resin | | 15 | Base material 1 | A | A | A | B |
| | Polyvinyl alcohols | : Carboxylic acid modified polyvinyl alcohol resin | 20 | | | | | |
| | Acrylic resin | | 25 | | | | | |
| | Starches | : Hydroxypropyl starch | 15 | | | | | |
| | Sodium alginate | | 8 | | | | | |
| | Styrene-butadiene type copolymer resin | | 0 | | | | | |
| | White pigment | : Amorphous silica | 20 | | | | | |

**[Table 2]**

| | Outermost coating layer | | | Base material | Peeling | Close contact | Color density | Textu re |
|---|---|---|---|---|---|---|---|---|
| | Materials | | Part by mass | | | | | |
| Ex. 8 | Water-soluble polyester resin | | 15 | Base material 1 | A | A | B | A |
| | Polyvinyl alcohols | : Carboxylic acid modified polyvinyl alcohol resin | 20 | | | | | |
| | Acrylic resin | | 10 | | | | | |
| | Starches | : Hydroxypropyl starch | 10 | | | | | |
| | Sodium alginate | | 8 | | | | | |
| | Styrene-butadiene type copolymer resin | | 0 | | | | | |
| | White pigment | : Amorphous silica | 20 | | | | | |
| Ex. 9 | Water-soluble polyester resin | | 15 | Base material 1 | A | A | B | A |
| | Polyvinyl alcohols | : Carboxylic acid modified polyvinyl alcohol resin | 20 | | | | | |
| | Acrylic resin | | 10 | | | | | |
| | Starches | : Hydroxypropyl starch | 35 | | | | | |
| | Sodium alginate | | 8 | | | | | |
| | Styrene-butadiene type copolymer resin | | 0 | | | | | |
| | White pigment | : Amorphous silica | 20 | | | | | |
| Ex. 10 | Water-soluble polyester resin | | 15 | Base material 1 | A | A | B | A |
| | Polyvinyl alcohols | : Carboxylic acid modified polyvinyl alcohol resin | 20 | | | | | |
| | Acrylic resin | | 10 | | | | | |
| | Starches | : Hydroxypropyl starch | 15 | | | | | |
| | Sodium alginate | | 3 | | | | | |
| | Styrene-butadiene type copolymer resin | | 0 | | | | | |
| | White pigment | : Amorphous silica | 20 | | | | | |
| Ex. 11 | Water-soluble polyester resin | | 15 | Base material 1 | A | A | A | A |
| | Polyvinyl alcohols | : Carboxylic acid modified polyvinyl alcohol resin | 20 | | | | | |
| | Acrylic resin | | 10 | | | | | |
| | Starches | : Hydroxypropyl starch | 15 | | | | | |
| | Sodium alginate | | 15 | | | | | |
| | Styrene-butadiene type copolymer resin | | 0 | | | | | |
| | White pigment | : Amorphous silica | 20 | | | | | |
| Ex. 12 | Water-soluble polyester resin | | 28 | Base material 1 | A | A | B | B |
| | Polyvinyl alcohols | : Carboxylic acid modified polyvinyl alcohol resin | 35 | | | | | |
| | Acrylic resin | | 20 | | | | | |
| | Starches | : Hydroxypropyl starch | 28 | | | | | |
| | Sodium alginate | | 14 | | | | | |
| | Styrene-butadiene type copolymer resin | | 0 | | | | | |
| | White pigment | : Amorphous silica | 20 | | | | | |
| Ex. 13 | Water-soluble polyester resin | | 11 | Base material 1 | B | B | A | A |
| | Polyvinyl alcohols | : Carboxylic acid modified polyvinyl alcohol resin | 15 | | | | | |
| | Acrylic resin | | 7 | | | | | |
| | Starches | : Hydroxypropyl starch | 11 | | | | | |
| | Sodium alginate | | 6 | | | | | |
| | Styrene-butadiene type copolymer resin | | 0 | | | | | |
| | White pigment | : Amorphous silica | 20 | | | | | |
| Ex. 14 | Water-soluble polyester resin | | 15 | Base material 1 | B | B | A | A |
| | Polyvinyl alcohols | : Carboxylic acid modified polyvinyl alcohol resin | 15 | | | | | |
| | Acrylic resin | | 10 | | | | | |
| | Starches | : Hydroxypropyl starch | 15 | | | | | |
| | Sodium alginate | | 10 | | | | | |
| | Styrene-butadiene type copolymer resin | | 10 | | | | | |
| | White pigment | : Amorphous silica | 20 | | | | | |

**[Table 3]**

| | Outermost coating layer | | | Base material | Peeling | Close contact | Color density | Texture |
|---|---|---|---|---|---|---|---|---|
| | Materials | | Part by mass | | | | | |
| | Water-soluble polyester resin | | 3 | Base material 1 | | | | |
| | Polyvinyl alcohols | : Carboxylic acid modified polyvinyl alcohol resin | 20 | | | | | |
| | Acrylic resin | | 10 | | | | | |
| Ex. 15 | Starches | : Hydroxypropyl starch | 15 | | A | B | A | A |
| | Sodium alginate | | 8 | | | | | |
| | Styrene-butadiene type copolymer resin | | 0 | | | | | |
| | White pigment | : Amorphous silica | 20 | | | | | |
| | Water-soluble polyester resin | | 45 | Base material 1 | | | | |
| | Polyvinyl alcohols | : Carboxylic acid modified polyvinyl alcohol resin | 20 | | | | | |
| | Acrylic resin | | 10 | | | | | |
| Ex. 16 | Starches | : Hydroxypropyl starch | 15 | | A | A | B | B |
| | Sodium alginate | | 8 | | | | | |
| | Styrene-butadiene type copolymer resin | | 0 | | | | | |
| | White pigment | : Amorphous silica | 20 | | | | | |
| | Water-soluble polyester resin | | 15 | Base material 1 | | | | |
| | Polyvinyl alcohols | : Carboxylic acid modified polyvinyl alcohol resin | 5 | | | | | |
| | Acrylic resin | | 10 | | | | | |
| Ex. 17 | Starches | : Hydroxypropyl starch | 15 | | B | B | A | A |
| | Sodium alginate | | 8 | | | | | |
| | Styrene-butadiene type copolymer resin | | 0 | | | | | |
| | White pigment | : Amorphous silica | 20 | | | | | |
| | Water-soluble polyester resin | | 15 | Base material 1 | | | | |
| | Polyvinyl alcohols | : Carboxylic acid modified polyvinyl alcohol resin | 55 | | | | | |
| | Acrylic resin | | 10 | | | | | |
| Ex. 18 | Starches | : Hydroxypropyl starch | 15 | | B | A | B | B |
| | Sodium alginate | | 8 | | | | | |
| | Styrene-butadiene type copolymer resin | | 0 | | | | | |
| | White pigment | : Amorphous silica | 20 | | | | | |
| | Water-soluble polyester resin | | 15 | Base material 1 | | | | |
| | Polyvinyl alcohols | : Carboxylic acid modified polyvinyl alcohol resin | 20 | | | | | |
| | Acrylic resin | | 3 | | | | | |
| Ex. 19 | Starches | : Hydroxypropyl starch | 15 | | A | B | A | A |
| | Sodium alginate | | 8 | | | | | |
| | Styrene-butadiene type copolymer resin | | 0 | | | | | |
| | White pigment | : Amorphous silica | 20 | | | | | |
| | Water-soluble polyester resin | | 15 | Base material 1 | | | | |
| | Polyvinyl alcohols | : Carboxylic acid modified polyvinyl alcohol resin | 20 | | | | | |
| | Acrylic resin | | 45 | | | | | |
| Ex. 20 | Starches | : Hydroxypropyl starch | 15 | | A | A | B | B |
| | Sodium alginate | | 8 | | | | | |
| | Styrene-butadiene type copolymer resin | | 0 | | | | | |
| | White pigment | : Amorphous silica | 20 | | | | | |

**[Table 4]**

| | Outermost coating layer | | | Base material | Peeling | Close contact | Color density | Texture |
|---|---|---|---|---|---|---|---|---|
| | Materials | | Part mass by | | | | | |
| | Water-soluble polyester resin | | 15 | Base material 1 | | | | |
| | Polyvinyl alcohols | : Carboxylic acid modified polyvinyl alcohol resin | 20 | | | | | |
| | Acrylic resin | | 10 | | | | | |
| Ex. 21 | Starches | : Hydroxypropyl starch | 5 | | B | B | B | A |
| | Sodium alginate | | 8 | | | | | |
| | Styrene-butadiene type copolymer resin | | 0 | | | | | |
| | White pigment | : Amorphous silica | 20 | | | | | |
| | Water-soluble polyester resin | | 15 | Base material 1 | | | | |
| | Polyvinyl alcohols | : Carboxylic acid modified polyvinyl alcohol resin | 20 | | | | | |
| | Acrylic resin | | 10 | | | | | |
| Ex. 22 | Starches | : Hydroxypropyl starch | 55 | | B | A | B | A |
| | Sodium alginate | | 8 | | | | | |
| | Styrene-butadiene type copolymer resin | | 0 | | | | | |
| | White pigment | : Amorphous silica | 20 | | | | | |
| | Water-soluble polyester resin | | 15 | Base material 1 | | | | |
| | Polyvinyl alcohols | : Carboxylic acid modified polyvinyl alcohol resin | 20 | | | | | |
| | Acrylic resin | | 10 | | | | | |
| Ex. 23 | Starches | : Hydroxypropyl starch | 15 | | A | B | B | A |
| | Sodium alginate | | 1 | | | | | |
| | Styrene-butadiene type copolymer resin | | 0 | | | | | |
| | White pigment | : Amorphous silica | 20 | | | | | |
| | Water-soluble polyester resin | | 15 | Base material 1 | | | | |
| | Polyvinyl alcohols | _{:} Carboxylic acid modified polyvinyl alcohol resin | 20 | | | | | |
| | Acrylic resin | | 10 | | | | | |
| Ex. 24 | Starches | : Hydroxypropyl starch | 15 | | B | A | A | A |
| | Sodium alginate | | 35 | | | | | |
| | Styrene-butadiene type copolymer resin | | 0 | | | | | |
| | White pigment | : Amorphous silica | 20 | | | | | |
| | Water-soluble polyester resin | | 15 | Base material 1 | | | | |
| | Polyvinyl alcohols | : Carboxylic acid modified polyvinyl alcohol resin | 20 | | | | | |
| | Acrylic resin | | 10 | | | | | |
| Ex. 25 | Starches | : Hydroxypropyl starch | 15 | | B | A | B | A |
| | Sodium alginate | | 8 | | | | | |
| | Styrene-butadiene type copolymer resin | | 0 | | | | | |
| | White pigment : | Amorphous silica | 20 | | | | | |

**[Table 5]**

| | Outermost coating layer | | | Base material | Peeling | Close contact | Color density | Texture |
|---|---|---|---|---|---|---|---|---|
| | Materials | | Part by mass | | | | | |
| Com Ex. 1 | Water-soluble polyester resin | | 0 | Base material 1 | | | | |
| | Polyvinyl alcohols | : Carboxylic acid modified polyvinyl alcohol resin | 20 | | | | | |
| | Acrylic resin | | 10 | | | | | |
| | Starches | : Hydroxypropyl starch | 15 | | B | C | A | B |
| | Sodium alginate | | 8 | | | | | |
| | Styrene-butadiene type copolymer resin | | 0 | | | | | |
| | White pigment | : Amorphous silica | 20 | | | | | |
| Com. Ex. 2 | Water-soluble polyester resin | | 15 | Base material 1 | | | | |
| | Polyvinyl alcohols | | 0 | | | | | |
| | Acrylic resin | | 10 | | | | | |
| | Starches | : Hydroxypropyl starch | 15 | | C | C | A | B |
| | Sodium alginate | | 8 | | | | | |
| | Styrene-butadiene type copolymer resin | | 0 | | | | | |
| | White pigment | : Amorphous silica | 20 | | | | | |
| Com. Ex. 3 | Water-soluble polyester resin | | 15 | Base material 1 | | | | |
| | Polyvinyl alcohols | : Carboxylic acid modified polyvinyl alcohol resin | 20 | | | | | |
| | Acrylic resin | | 0 | | | | | |
| | Starches | : Hydroxypropyl starch | 15 | | B | C | A | B |
| | Sodium alginate | | 8 | | | | | |
| | Styrene-butadiene type copolymer resin | | 0 | | | | | |
| | White pigment | : Amorphous silica | 20 | | | | | |
| Com Ex. 4 | Water-soluble polyester resin | | 15 | Base material 1 | | | | |
| | Polyvinyl alcohols | : Carboxylic acid modified polyvinyl alcohol resin | 20 | | | | | |
| | Acrylic resin | | 10 | | | | | |
| | Starches | | 0 | | B | C | C | B |
| | Sodium alginate | | 8 | | | | | |
| | Styrene-butadiene type copolymer resin | | 0 | | | | | |
| | White pigment | : Amorphous silica | 20 | | | | | |
| Com. Ex. 5 | Water-soluble polyester resin | | 15 | Base material 1 | | | | |
| | Polyvinyl alcohols | : Carboxylic acid modified polyvinyl alcohol resin | 20 | | | | | |
| | Acrylic resin | | 10 | | | | | |
| | Starches | : Hydroxypropyl starch | 15 | | B | C | C | B |
| | Sodium alginate | | 0 | | | | | |
| | Styrene-butadiene type copolymer resin | | 0 | | | | | |
| | White pigment | : Amorphous silica | 20 | | | | | |
| Com. Ex. 6 | Water-soluble polyester resin | | 15 | Base material 1 | | | | |
| | Polyvinyl alcohols | : Carboxylic acid modified polyvinyl alcohol resin | 20 | | | | | |
| | Acrylic resin | | 10 | | | | | |
| | Starches | : Hydroxypropyl starch | 15 | | B | C | C | B |
| | Sodium alginate | | 8 | | | | | |
| | Styrene-butadiene type copolymer resin | | 0 | | | | | |
| | White pigment | : Kaolin | 20 | | | | | |
| Com. Ex. 7 | Water-soluble polyester resin | | 15 | Base material 1 | | | | |
| | Polyvinyl alcohols | : Other polyvinyl alcohol resins | 20 | | | | | |
| | Acrylic resin | | 10 | | | | | |
| | Starches | : Hydroxypropyl starch | 15 | | C | C | A | B |
| | Sodium alginate | | 8 | | | | | |
| | Styrene-butadiene type copolymer resin | | 0 | | | | | |
| | White pigment | : Amorphous silica | 20 | | | | | |
| Com Ex. 8 | Water-soluble polyester resin | | 15 | Base material 1 | | | | |
| | Polyvinyl alcohols | : Carboxylic acid modified polyvinyl alcohol resin | 20 | | | | | |
| | Acrylic resin | | 10 | | | | | |
| | Starches | : Other starches | 15 | | B | C | C | B |
| | Sodium alginate | | 8 | | | | | |
| | Styrene-butadiene type copolymer resin | | 0 | | | | | |
| | White pigment | : Amorphous silica | 20 | | | | | |
| Com. Ex. 9 | Water-soluble polyester resin | | 15 | Base material 2 | | | | |
| | Polyvinyl alcohols | : Carboxylic acid modified polyvinyl alcohol resin | 20 | | | | | |
| | Acrylic resin | | 10 | | | | | |
| | Starches | : Hydroxypropyl starch | 15 | | C | A | C | C |
| | Sodium alginate | | 8 | | | | | |
| | Styrene-butadiene type copolymer resin | | 0 | | | | | |
| | White pigment | : Amorphous silica | 20 | | | | | |

### <Transfer paper>

A coating layer-coating composition was applied to one side of the base material using an air knife coater and dried using a hot air dryer to form a coating layer which is the outermost coating layer. After that, calendaring treatment was applied to finally produce a transfer paper in roll form. The coating amount of the outermost coating layer was set at 18 g/m².

In Base material 1 having a non-aqueous resin laminate layer, the outermost coating layer was provided on the side with the laminate layer of Base material 1.

### <Printed transfer paper>

Using a transfer paper in roll form and an inkjet printer (ValueJet^{®} VJ-1628TD, manufactured by Mutoh Industries Ltd.) set with ink containing reactive dyes, patterns for evaluation were printed with inks (cyan, magenta, yellow, and black) on the side with the outermost coating layer of the transfer paper to finally obtain a printed transfer paper in sheet form. NOVACRON^{®} MI ink manufactured by Huntsman Corporation was used as the ink containing reactive dyes.

### <Transfer printing>

A rolled cotton cloth without pretreatment was used as a fiber material. The printed surface of the printed transfer paper and the surface to be printed of the cotton cloth were transported facing each other, and then heated and pressurized with the two in close contact using a roll nip system equipped with a heating roll. The conditions of heating and pressurization were 120°C of temperature, 70kg/cm of linear pressure, and 0.5 seconds of time.

### <Peeling of the printed transfer paper>

The printed transfer paper was peeled off from the cotton cloth to which the printed transfer paper was attached by the method of rolling the printed transfer paper and the cotton cloth separately on separate rolls.

### <Evaluation of peeling>

When the printed transfer paper was peeled off from the cotton cloth, the condition of the peeled surface of the cotton cloth and the condition of the peeled surface of the cotton cloth after washing with water were observed. Visual evaluation was made based on the condition of the peeled surface using the following criteria.

The evaluation results are shown in Table 1 through Table 5. In the present invention, if the evaluation is A or B, the transfer paper is judged to be well peeled off from the cotton cloth.
A: Easily peeled off, and even if components of the outermost coating layer are adhered, they can be easily removed by washing with water and there is no loss of the formed pattern.
B: Components of the outermost coating layer are adhered, but can be peeled off, and the adhered components can be removed by washing with water, leaving no defect in the formed pattern.
C: Peeling is difficult or impossible, some parts of the printed transfer paper are torn and remain adhered, and it is difficult to remove them by washing with water, or there is a lack of formed patterns.

### <Steaming treatment of cotton cloth>

After the printed transfer paper was peeled off, the rolled cotton cloth was transferred from the unwinder to the winder, during which time it was subjected to wet heat treatment at 105°C for 10-15 minutes using the atmospheric pressure steaming method.

### <Washing>

After steaming, the resulting cotton cloth was washed under running water.

### <Evaluation of close contact>

The following criteria were used to visually evaluate whether the close contact between the printed transfer paper and the fiber material was good in terms of distortion and out-of-focus of patterns formed on the cotton cloth. The evaluation results are shown in Table 1 to Table 5. In the present invention, if the evaluation is A or B, the transfer paper is judged to have good close contact to the fiber material.
A: Good, with no distortion or out-of-focus.
B: Inferior to A above, but distortion and/or out-of-focus images are not so obvious that they are generally good.
C: Inferior to B above, with slight distortion and/or out-of-focus, lower limit of practical use.
D: Inferior to C above, distortion and/or out-of-focus images are observed, and it is not good.

### < Evaluation of color density >

The solid image areas of the three colors (cyan, magenta, and yellow) formed on the cotton cloth were measured for color density using an optical density meter (X-rite^{®} 530, X-Rite Incorporated), and the color density values of the three colors were summed. From the total value, the color density was evaluated according to the following criteria. The evaluation results are listed in Table 1 through Table 5. In the present invention, if the evaluation is A or B, the transfer paper is judged to be able to provide fiber material with good color density.
A: Total value is 4.8 or more
B: Total value is 4.5 or more and less than 4.8
C: Total value is 4.2 or more and less than 4.5
D: Total value is less than 4.2

### <Evaluation of texture>

In the cotton cloth with the pattern formed, the texture of the area where the solid black image was formed and the area where the transferred image did not exist was evaluated by human touch using the following criteria. The evaluation results are listed in Table 1 through Table 5. In the present invention, if the evaluation is A or B, the transfer paper is judged to be able to provide a fiber material with no significant difference in texture between the area where the pattern is formed and the area where the pattern is not formed.
A: There is no difference in texture between areas, and the texture is good.
B: There is a slight difference in texture between areas, but the difference in texture is not noticeable.
C: There is a clearer difference in texture between areas than B above.

From Tables 1 to 5, it can be seen that the transfer paper of Examples 1 to 25 corresponding to the present invention satisfies the following requirements: (1) the transfer paper has good close contact to the fiber material, (2) the color density of the pattern formed on the fiber material is good, (3) the transfer paper peels off well from the fiber material after transferring the dye, and (4) there is no significant difference in texture between the area of the fiber material on which the pattern is formed and the area of the fiber material on which the pattern is not formed.

On the other hand, it can be seen that Comparative Examples 1 to 9, which do not satisfy the constitution of the present invention, cannot simultaneously satisfy these effects of the present invention.

Mainly from the comparison between Examples 1-3 and Examples 15 and 16, it can be seen that the content of water-soluble polyester resin in the outermost coating layer is preferably 5 parts by mass or more and 30 parts by mass or less based on 20 parts by mass of white pigment in the outermost coating layer, per one side of the base material.

Mainly from the comparison between Examples 2, 4 and 5 and Examples 17 and 18, it can be seen that the content of carboxylic acid-modified polyvinyl alcohol resin in the outermost coating layer is preferably 10 parts by mass or more and 35 parts by mass or less based on 20 parts by mass of white pigment in the outermost coating layer, per one side of the base material.

Mainly from the comparison between Examples 2 and 6 and Example 19, Examples 2 and 6, in which the content of acrylic resin in the outermost coating layer is 5 parts by mass or more based on 20 parts by mass of white pigment in the outermost coating layer per one side of the base material, have excellent close contact between the fiber material and the printed transfer paper. Mainly from the comparison between Examples 2 and 7 and Example 20, Examples 2 and 7, in which the content of acrylic resin in the outermost coating layer is 25 parts by mass or less based on 20 parts by mass of white pigment in the outermost coating layer per one side of the base material, have excellent color density of the pattern formed on the fiber material. Therefore, it can be seen that the content of acrylic resin in the outermost coating layer is preferably 5 parts by mass or more and 25 parts by mass or less based on 20 parts by mass of white pigment in the outermost coating layer.

Mainly from the comparison between Examples 2, 8 and 9 and Examples 21 and 22, it can be seen that the content of hydroxypropyl starch in the outermost coating layer is preferably 10 parts by mass or more and 35 parts by mass or less based on 20 parts by mass of white pigment in the outermost coating layer, per one side of the base material.

Mainly from the comparison between Examples 2 and 10 and Example 23, Examples 2 and 10, in which the content of alginate in the outermost coating layer is 3 parts by mass or more based on 20 parts by mass of white pigment in the outermost coating layer per one side of the base material, have excellent close contact between the fiber material and the printed transfer paper. Mainly from the comparison between Examples 2 and 11 and Example 24, Examples 2 and 11, in which the content of alginate in the outermost coating layer is 15 parts by mass or less based on 20 parts by mass of white pigment in the outermost coating layer per one side of the base material, are superior in peeling the printed transfer paper from the fiber material after dye transfer. Therefore, it can be seen that the content of alginate in the outermost coating layer is preferably 3 parts by mass or more and 15 parts by mass or less based on 20 parts by mass of white pigment in the outermost coating layer.

Mainly from the comparison between Example 2 and Example 25, it can be seen that the inclusion of fatty acid esters in the outermost coating layer is preferable.

The disclosure of Japanese Patent Application No. 2019-058089 (filing date: March 26, 2019) and Japanese Patent Application No. 2019-225616 (filing date: December 13, 2019) is incorporated herein by reference in its entirety.

All references, patent applications, and technical standards described herein are incorporated herein by reference to the same extent as if the individual references, patent applications, and technical standards were specifically and individually noted as being incorporated by reference.

## Claims

1. A transfer paper before printing a pattern for use in a transfer textile printing method which comprises the following steps: printing a pattern on the transfer paper with an ink containing a dye to obtain a printed transfer paper; transferring the dye from the printed transfer paper to a fiber material by heating and pressurizing with the printed transfer paper and the fiber material in close contact; peeling off the printed transfer paper from the fiber material after the transferring step; and subjecting the fiber material after the peeling step to a dye fixing treatment,
comprising a base material with one or more non-aqueous resin laminate layer(s) on one side of a base paper, and one or more coating layer(s) on the laminate layer(s) of the base material,
wherein
an outermost coating layer, which is positioned outermost in the coating layer(s) with respect to the base material, contains a white pigment and a binder,
the white pigment contains at least an amorphous silica, and
the binder contains at least five types consisting of a water-soluble polyester resin, a carboxylic acid-modified polyvinyl alcohol resin, an acrylic resin, a hydroxypropyl starch and an alginate.

2. The transfer paper according to claim 1, wherein contents of the water-soluble polyester resin, the carboxylic acid-modified polyvinyl alcohol resin, the acrylic resin, the hydroxypropyl starch, and the alginate in the outermost coating layer are 5 parts by mass or more and 30 parts by mass or less of the water-soluble polyester resin, 10 parts by mass or more and 35 parts by mass or less of the carboxylic acid-modified polyvinyl alcohol resin, 5 parts by mass or more and 25 parts by mass or less of the acrylic resin, 10 parts by mass or more and 35 parts by mass or less of the hydroxypropyl starch, and 3 parts by mass or more and 15 parts by mass or less of the alginate, respectively, based on 20 parts by mass of the white pigment in the outermost coating layer.

3. The transfer paper according to claim 1 or 2, wherein the outermost coating layer contains a fatty acid ester.

4. A transfer textile printing method comprising the following steps:
obtaining a transfer paper having a base material with one or more non-aqueous resin laminate layer(s) on one side of a base paper, and one or more coating layer(s) on the laminate layer(s) of the base material, wherein an outermost coating layer, which is positioned outermost in the coating layer(s) with respect to the base material, contains a white pigment and a binder, the white pigment contains at least amorphous silica, and the binder contains at least five types consisting of a water-soluble polyester resin, a carboxylic acid-modified polyvinyl alcohol resin, an acrylic resin, a hydroxypropyl starch and an alginate;
printing a pattern on the transfer paper with an ink containing a dye to obtain a printed transfer paper;
transferring the dye from the printed transfer paper to a fiber material by heating and pressurizing with the printed transfer paper and the fiber material in close contact;
peeling off the printed transfer paper from the fiber material after the transferring step; and
subjecting the fiber material after the peeling step to a dye fixing treatment.

5. The transfer textile printing method according to claim 4, wherein contents of the water-soluble polyester resin, the carboxylic acid-modified polyvinyl alcohol resin, the acrylic resin, the hydroxypropyl starch, and the alginate in the outermost coating layer are 5 parts by mass or more and 30 parts by mass or less of the water-soluble polyester resin, 10 parts by mass or more and 35 parts by mass or less of the carboxylic acid-modified polyvinyl alcohol resin, 5 parts by mass or more and 25 parts by mass or less of the acrylic resin, 10 parts by mass or more and 35 parts by mass or less of the hydroxypropyl starch, and 3 parts by mass or more and 15 parts by mass or less of the alginate, respectively, based on 20 parts by mass of the white pigment in the outermost coating layer.

6. The transfer textile printing method according to claim 4 or 5, wherein the outermost coating layer contains a fatty acid ester.
